# EUROPÄISCHE PATENTSCHRIFT

(11) **EP 4 057 087 B1**
(45) Veröffentlichungstag und Bekanntmachung des Hinweises auf die Patenterteilung: **06.03.2024**
(21) Anmeldenummer: 21161276.7
(22) Anmeldetag: 08.03.2021
(51) Int. Cl.: G05B 19/05

(54) **VERFAHREN ZUM BEREITSTELLEN EINES PROGNOSTIZIERTEN BINÄREN PROZESS-SIGNALS**
A METHOD FOR PROVIDING A PREDICTED BINARY PROCESS SIGNAL
PROCÉDÉ DE FOURNITURE D'UN SIGNAL DE PROCESSUS BINAIRE PRÉVU

(43) Veröffentlichungstag der Anmeldung: 14.09.2022
(73) Patentinhaber: Siemens Aktiengesellschaft, 80333 München (DE)
(72) Erfinder: Grosch, Thomas, 90574 Roßtal (DE)
(74) Vertreter: Siemens Patent Attorneys

(56) Entgegenhaltungen:
- EP-A2- 1 657 119
- DE-A1-102007 041 522
- US-A1- 2011 285 516

## Beschreibung

Die Erfindung betrifft ein Verfahren zum Bereitstellen eines prognostizierten binären Prozess-Signals von einem ersten Sensor für eine Automatisierungssteuerung, welche einen industriellen Prozess steuert, wobei eine Eingabebaugruppe neben dem zu prognostizierenden binären Prozess-Signal von dem ersten Sensor weitere Prozess-Signale von weiteren Sensoren erfasst.

Des Weiteren betrifft die Erfindung eine Eingabebaugruppe, ausgestaltet zum Anschluss eines ersten Sensors, und zum Erfassen eines binären Prozess-Signals des ersten Sensors, weiterhin ausgestaltet weitere Prozess-Signale zu erfassen.

Binäre Prozess-Signale sind beispielsweise Rückmeldesignale von Sensoren aus einer Steuer- oder Regelstrecke bezüglich der Zustände der Steuergrößen, z.B. eine Schalterstellung (Ein/Aus), eine Ventilstellung (Offen/Geschlossen) oder ein Bewegungszustand eines Motors (Drehend/Stehend).

Gesteuert wird, z. B. eine Fertigungsstrecke oder eine Bewegung eines Antriebs.

Geregelt wird, z. B. ein Durchfluss eines Mediums durch ein Rohr, ein Füllstand einer Flüssigkeit in einem Behälter oder eine Drehzahl bzw. Drehmoment eines elektrischen Motors.

Derartige Steuerungs- und Regelungssysteme kommen beispielsweise in Prozessleitsystemen zum Einsatz. Prozessleitsysteme dienen zur Automatisierung von Prozessen in technischen Anlagen. Bei den automatisierten Prozessen kann es sich beispielsweise um verfahrens- oder fertigungstechnische Prozesse oder Prozesse zur Erzeugung oder Verteilung von elektrischer Energie handeln.

Prozessleitsysteme sind üblicherweise hierarchisch durch mehrere Ebenen strukturiert (siehe z.B. EP 3 125 053 B1). Auf einer untersten Ebene, der sogenannten Feldebene, werden mittels als Sensoren ausgebildeter Feldgeräten (z.B. Druckmessumformer, Temperatursensor, Füllstandsensor, Durchflusssensor) die Zustände des technischen Prozesses erfasst bzw. mittels als Aktoren ausgebildeter Feldgeräte (z.B. Stellungsregler für Regelventile) der Prozess gezielt beeinflusst.

Darüber liegt eine Steuerungs- und/oder Regelungsebene mit Steuer- und/oder Regelungseinrichtungen, bei denen üblicherweise eine Verarbeitungseinheit (CPU - central processing unit) als Bestandteil einer speicherprogrammierbaren Steuerung feldnahe Steuerungs- und/oder Regelungsfunktionen möglichst in Echtzeit ausführt, wobei sie als Eingangsgrößen Werte von Größen des Prozesses von den Sensoren empfangen und als Ausgangsgrößen z.B. Befehle an die Aktoren abgeben.

Auf der wiederum darüber liegenden Prozessführungsebene findet in Leitrechnern eine übergeordnete Steuerung und Regelung statt, wobei ein aus einer oder mehreren Operatorstationen bestehendes Operatorsystem das Bedienen und Beobachten des Prozesses durch das Bedienpersonal der Anlage ermöglicht.

Ein Datenaustausch zwischen den Feldgeräten, z.B. Eingabebaugruppen, und der Verarbeitungseinheit der speicherprogrammierbaren Steuerung erfolgt üblicherweise über einen Feldbus, wie z.B. PROFIBUS DP oder PROFINET. Da die Feldgeräte oft selbst keinen entsprechenden Feldbusanschluss aufweisen, werden sie über dezentrale Peripheriestationen an den digitalen Feldbus angebunden. Eine Peripheriestation besteht üblicherweise aus einem Interfacemodul (Kopfbaugruppe) zum Anschluss an den digitalen Feldbus und einer Anzahl von Peripheriebaugruppen (vor allem digitale und analoge Ein- und Ausgabeeinheiten) zum Anschluss der Feldgeräte. Jede Eingabe- oder Ausgabeeinheit kann dabei nur einen einzigen sogenannten "Kanal" zum Anschluss eines einzigen Feldgerätes aufweisen. Sie kann aber auch mehrere Kanäle zum Anschluss mehrerer Feldgeräte aufweisen (das ist der übliche Fall, z.B. 8,16 oder 32).

Üblicherweise befindet sich die Peripheriebaugruppe dabei unmittelbar vor Ort im Feld bei den Feldgeräten, während sich die speicherprogrammierbare Steuerung an einem zentraleren Punkt der Anlage befindet. Sehr zukunftsgerichtete Steuerungs- und Regelungskonzepte sehen sogar eine cloud-basierte Steuerungs- oder Regelungseinrichtung vor.

In einem typischen Ablauf werden von der Verarbeitungseinheit zyklisch die von den Eingabeeinheiten der Peripheriebaugruppen bereitgestellten Werte der Eingangsgrößen nacheinander eingelesen, verarbeitet und Werte für Ausgangsgrößen erzeugt. Diese Werte für die Ausgangsgrößen werden abschließend in die Ausgabeeinheiten geschrieben.

Bei den Prozess-Signalen ist es von Nachteil, dass die zum Zeitpunkt der Verarbeitung in der Automatisierungssteuerung vorliegenden (scheinbaren) "Ist"-Werte der von der Eingabebaugruppe bereitgestellten Prozess-Signale bereits veraltet und nicht mehr aktuell sind. Diese Verzögerung wirkt bei der Steuerung oder Regelung als (zusätzliche) Totzeit. Die Gründe für diese Verzögerung liegen beispielsweise in:
- dem gesamten Vorgang der Signalaufbereitung in der Eingabeeinheit, z.B. Analog-Digital-Wandlung und Filterung,
- der Übertragung über teilweise langsame Feldbusse zu einem Feldbus-Controller,
- der Übertragung vom Feldbus-Controller zur Automatisierungssteuerung bzw. Verarbeitungseinheit, und
- Verzögerungen dadurch, dass vor der Verarbeitung zuerst die Werte aller oder zumindest einer Gruppe von Eingabeeinheiten eingelesen werden.

Dieses Problem kommt, insbesondere bei Automatisierungssteuerungen für räumlich groß verteilte Anlagen der Verfahrens- oder Fertigungstechnik zum Tragen, insbesondere bei Anlagen, die sich über mehrere Quadratkilometer erstrecken können, wie z.B. Anlagen der chemischen Industrie, Öl- und Gas-Industrie, Metallindustrie, Bergwerke, Kraftwerke, Verkehrsinfrastruktur (Flughäfen, Tunnel), etc..

Um die schlechte(re) Steuerungs- und Regelungs-Qualität aufgrund veralteter Werte etwas auszugleichen, werden ersatzweise die Verarbeitungszyklen verkürzt. Der häufigere Durchlauf belastet aber insbesondere die Verarbeitungseinheit. Außerdem ist eine höhere Übertragungs-Bandbreite nötig.

Ein anderer Ansatz ist die sogenannte Takt-Synchronität, bei der Erfassen, Verarbeiten und Ausgeben streng getaktet erfolgt. Die Verzögerung zwischen Erfassen und Verarbeiten wird nicht beseitigt, aber deterministisch. Nachteilig sind hierbei die aufwändige Projektierung und die schlechte Änderbarkeit im laufenden Betrieb. Außerdem sind üblicherweise besonders dafür vorgesehene und damit teure Komponenten erforderlich.

Die EP 1 657 119 A2 offenbart ein Insassen-Erfassungssystem, welches das Auslösen eines Airbags gezielter steuert.

Es ist deshalb Aufgabe vorliegender Erfindung, die Auswirkungen der vorstehend erläuterten Verzögerungen zu reduzieren.

Für das Verfahren zum Bereitstellen eines prognostizierten binären Prozess-Signals von einem ersten Sensor für eine Automatisierungssteuerung, welche einen industriellen Prozess steuert, wobei eine Eingabebaugruppe neben dem zu prognostizierenden binären Prozess-Signal von dem ersten Sensor weitere Prozess-Signale von weiteren Sensoren erfasst, wird die Aufgabe dadurch gelöst, dass von den Prozess-Signalen jeweils ein Signalverlauf mit seinen jeweiligen zeitlichen zugeordneten Werten für eine vorbestimmbare Zeitspanne zwischengespeichert wird, und wobei zur Kompensation einer Verzögerung zwischen einem tatsächlichen Auftreten des binären Prozess-Signals am ersten Sensor und einer darauf folgenden Verarbeitung in der Automatisierungssteuerung eine Lernphase durchgeführt wird, wobei in der Lernphase einem neuronalen Netz zu einem Schaltzeitpunkt, nämlich dem Zeitpunkt an dem das binäre Prozess-Signal einen ersten Flankenwechsel von logisch Null nach logisch Eins oder einen zweiten Flankenwechsel von logisch Eins nach logisch Null aufzeigt, die zwischengespeicherten Werte der Signalverläufe zu einem Lernzeitpunkt, welcher sich aus dem Schaltzeitpunkt abzüglich einer Prognosezeitspanne ergibt, als stimulierende Eingangssignal-Muster zugeführt wird, wobei dem Eingangs-Signalmuster der entsprechende Flanken-Wechsel zugeordnet wird, und in einer Betriebsphase werden die weiteren Signalverläufe derart überwacht, dass aktuelle Werte aus den Signalverläufen dem neuronalen Netz als auszuwertendes Eingangssignal-Muster zugeführt werden und bei einer Übereinstimmung eines gelernten Eingangs-Signalmusters mit einem zugeführten Eingangssignal-Muster wird der zugehörige Flanken-Wechsel als Prognosewert für das binäre Prozess-Signal für die Automatisierungssteuerung zur Verfügung gestellt.

Der prognostizierte Wert liegt hierzu vorzugsweise um die Prognosezeitspanne in der Zukunft, wobei die Prognosezeitspanne in Abhängigkeit der Verzögerungen zwischen der Erfassung der Größe und der Erzeugung einer Ausgangsgröße aus der Eingangsgröße eingestellt wird.

Da die Genauigkeit der Prognose mit zunehmender Zeitspanne abnimmt, ist die Zeitspanne bevorzugt gleich oder kleiner als die Summe dieser Verzögerungen. Vorteilhaft wird ein Optimum eingestellt zwischen der Verarbeitung möglichst aktueller Werte (Zeitspanne möglichst groß) und Genauigkeit der Prognose (Zeitspanne möglichst klein).

Vorteilhafterweise wird ein Verfahren zur Mustererkennung aus dem Bereich der künstlichen Intelligenz verwendet. Erfindungsgemäß wird eine derartige Mustererkennung zur Prognose von Binärsignalen verwendet. Üblicherweise werden die Sensoren (binäre und analoge) in einer Automatisierungsanlage über einen Feldbus an die Automatisierungssteuerung angeschlossen.

In einer Automatisierungsanlage können auch Peripheriestationen vorkommen, welche aus sogenannten Kopfbaugruppen und einem oder mehreren Eingabebaugruppen bestehen, diese Erfassen die Sensorsignale und geben diese letztendlich über den Feldbus an die Automatisierungssteuerung weiter. Ein Vorteil bei diesem Verfahren ist es, dass zur Prognose eines Binärsignales kein dynamisches Model einer Anlage erstellt werden muss. Ein verwendeter Algorithmus benötigt kein Wissen über die physikalischen Gegebenheiten. Das Verfahren kann somit allgemein gültig angewendet werden.

Weiterhin ist es von Vorteil, wenn die Überwachung in der Betriebsphase auf Seiten der Eingabebaugruppe oder auf Seiten der Eingabebaugruppe zugeordneten Peripheriebaugruppe durchgeführt wird, wobei von dort das prognostizierte binäre Prozess-Signal über eine Feldbuskommunikation an die Automatisierungssteuerung weitergeleitet wird.

In einer weiteren Ausgestaltung des Verfahrens ist vorgesehen, in der Betriebsphase ein nach der Prognose zum Schaltzeitpunkt eintretendes reales Prozess-Signal zur laufenden Verbesserung der Prognose für einem im Hintergrund fortlaufenden Lernprozess zu verwenden.

Mit Vorteil ist das neuronale Netz als eine selbstorganisierende Karte ausgestaltet. Als selbstorganisierende Karten, Kokonenkarten oder Kokonennetze bezeichnet man eine Art von künstlichen neuronalen Netzen. Sie sind für ein unüberwachtes Lernverfahren ein leistungsfähiges Werkzeug für ein Data-Mining.

Ebenso wird die eingangs genannte Aufgabe durch eine Eingabebaugruppe gelöst, welche ausgestaltet ist, zum Anschluss eines ersten Sensors und zum Erfassen eines binären Prozess-Signals des ersten Sensors. Weiterhin ausgestaltet, weitere Prozess-Signale zu erfassen, umfassend ein Speichermittel ausgestaltet von dem Prozess-Signalen jeweils ein Signalverlauf für eine vorbestimmbare Zeitspanne zwischenzuspeichern, ein Lernmittel aufweisend ein neuronales Netz und ein Trigger-Mittel ausgestaltet dem neuronalen Netz zu einem Schaltzeitpunkt, nämlich dem Zeitpunkt an dem das binäre Prozess-Signal einen ersten Flanken-Wechsel von logisch Null nach logisch Eins oder einen zweiten Flanken-Wechsel von logisch Eins nach logisch Null aufzeigt, die zwischengespeicherten Werte der Signalverläufe zu einen Lernzeitpunkt, welcher sich aus dem Schaltzeitpunkt abzüglich einer Prognosezeitspanne ergibt, als stimulierendes Eingangssignal-Muster zuzuführen, weiterhin ausgestaltet dem Eingangssignal-Muster den entsprechenden Flanken-Wechsel zuzuordnen, ein Überwachungsmittel ausgestaltet die weiteren Signalverläufe derart zu überwachen, dass aktuelle Werte aus den Signalverläufen dem neuronalen Netz als auszuwertendes Eingangssignal-Muster zu geführt werden und bei einer Übereinstimmung eines gelernten Eingangssignal-Musters mit einem zugeführten Eingangssignal-Muster wird der zugehörige Flanken-Wechsel als Prognosewert für das binäre Prozess-Signal der Automatisierungssteuerung zur Verfügung gestellt.

Mit Vorteil ist die Eingabebaugruppe mit einer Feldbusschnittstelle ausgestaltet, wobei ein Sendemittel vorhanden ist, welches ausgestaltet ist, den Prognosewert vorrangig vor anderen Meldungen abzusenden.

In einer weiteren Verbesserung der Eingabebaugruppe ist das Lernmittel weiterhin dazu ausgestaltet im Hintergrund zu dem Überwachungsmittel zu arbeiten und ein nach der Prognose zum Schaltzeitpunkt eintretendes reales Prozesssignal zur laufenden Verbesserung der Prognose für einem im Hintergrund fortlaufenden Lernprozess zu verwenden.

Die Zeichnung zeigt ein Ausführungsbeispiel der Erfindung, dabei zeigt
- FIG 1: eine Veranschaulichung der zeitlichen Auswertung der Prozesssignale,
- FIG 2: die Prozesssignale untereinander dargestellt zur zeitlichen Ermittlung eines Eingangssignal-Musters und
- FIG 3: eine Eingabebaugruppe zur Erfassung von Prozesssignalen und zum prognostizieren eines binären Prozesssignals.

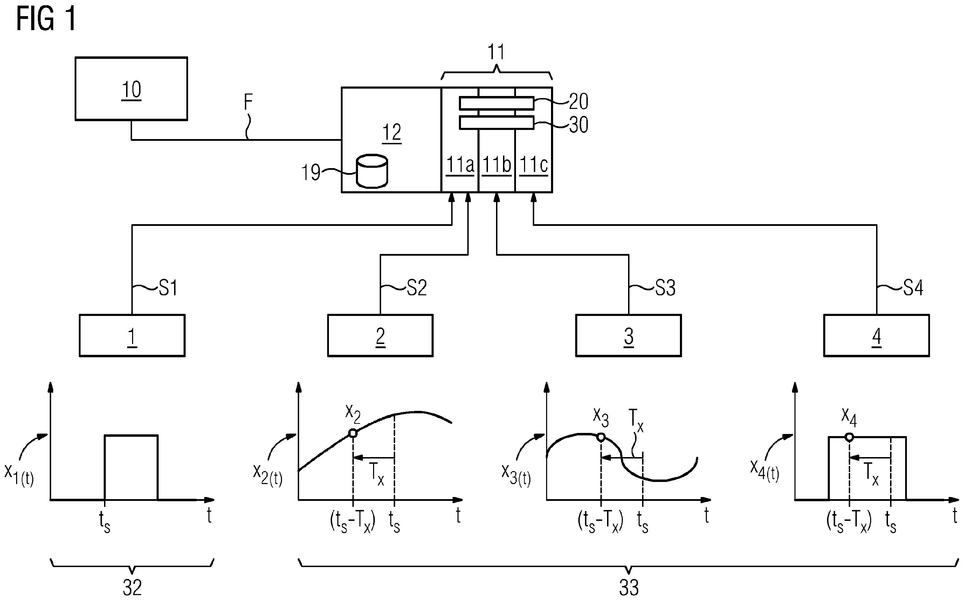

Gemäß FIG 1 ist eine Automatisierungssteuerung 10 über einen Feldbus F an eine Peripheriebaugruppe 12 angeschlossen. Die Peripheriebaugruppe 12 weist eine Eingabebaugruppe 11 auf, welche sich in eine erste Eingabebaugruppe 11a, eine zweite Eingabebaugruppe 11b und eine dritte Eingabebaugruppe 11c aufteilt. An die erste Eingabebaugruppe 11a ist ein erster Sensor 1 angeschlossen, welcher ein erstes Prozess-Signal S1 liefert. Weiterhin ist an die erste Eingabebaugruppe 11a ein zweiter Sensor 2 angeschlossen, welcher ein zweites Prozess-Signal S2 liefert. An die zweite Eingabebaugruppe 11b ist ein dritter Sensor 3 angeschlossen, welcher ein drittes Prozess-Signal S3 liefert. An die dritte Eingabebaugruppe 11c ist ein vierter Sensor 4 angeschlossen, welcher ein viertes Prozess-Signal S4 liefert. Für den ersten Sensor 1 bzw. dessen erstes Prozess-Signal S1 soll eine Prognose erstellt werden. Dazu werden die Prozess-Signale S1,S2,S3,S4, welchen jeweils ein Signalverlauf x₁₍ₜ₎,x₂₍ₜ₎,x₃₍ₜ₎,x₄₍ₜ₎ mit seinen jeweiligen zeitlichen zugeordneten Werten x₁,x₂,x₃,x₄ zugeordnet ist, für eine vorbestimmbare Zeitspanne t_{B} in der Peripheriebaugruppe 12 mit einem Speichermittel 19 zwischengespeichert.

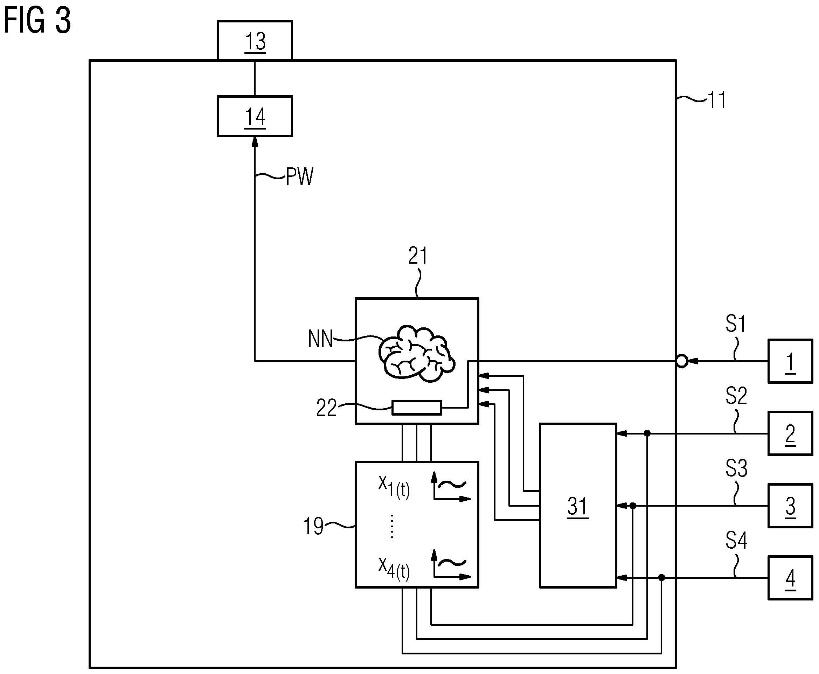

Zur Kompensation einer Verzögerung zwischen einem tatsächlichen Auftreten des binären Prozess-Signals S1 am ersten Sensor 1 und einer darauffolgenden Verarbeitung in der Automatisierungssteuerung 10 wird eine Lernphase 20 durchgeführt. In der Lernphase 20 wird ein neuronales Netz NN (siehe auch FIG 3) zu einem Schaltzeitpunkt tₛ, nämlich dem Zeitpunkt an dem das binäre Prozess-Signal S1 einen ersten Flanken-Wechsel F1 von logisch Null nach logisch Eins oder einen zweiten Flanken-Wechsel F2 von logisch Eins nach logisch Null aufzeigt, die zwischengespeicherten Werte x₂₍tₛ-Tx₎,x₃₍tₛ-Tx₎,x₄₍tₛ-Tx₎ der Signalverläufe x₁₍ₜ₎,x₂₍ₜ₎,x₃₍ₜ₎,x₄₍ₜ₎ zu einem Lernzeitpunkt tₛ-Tx, welcher sich aus dem Schaltzeitpunkt tₛ abzüglich einer Prognosezeitspanne Tx ergibt, als stimulierendes Eingangssignal-Muster M1,...,M5 zugeführt, wobei zusätzlich dem Eingangssignal-Muster M1,...,M5 der entsprechende Flanken-Wechsel F1,F2 zugeordnet wird.

Demnach wird für die Signalverläufe S2,S3,S4 eine Rückwärtsbetrachtung 33 in die Vergangenheit für die Lernphase durchgeführt. Bei dem zu prognostizierenden ersten Signalverlauf S1 wird für die Prognose eine Vorwärtsbetrachtung 32 durchgeführt.

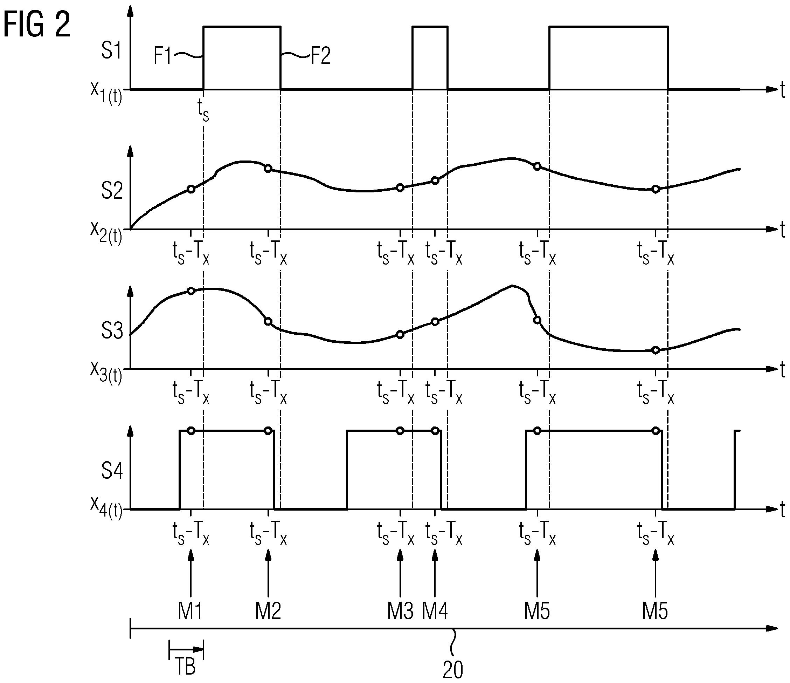

Mit der FIG 2 sind die Prozess-Signale S1,S2,S3,S4 untereinander dargestellt. Tritt beim ersten Prozess-Signal S1 im ersten Signalverlauf x₁₍ₜ₎ zum Schaltzeitpunkt tₛ ein erster Flankenwechsel F1 auf, so wird für die weiteren Prozess-Signale S2,S3,S4 für ein einzugebendes stimulierendes erstes Eingangssignal-Muster M1 jeweils ein Wert aus der Vergangenheit tₛ-Tx dem neuronalen Netz NN zugeführt. Bei weiteren Flankenwechsel ist die Entnahme des Vergangenheitswertes für die weiteren Eingangssignal-Muster M2,M3,M4,M5 in analoger Weise zu betrachten.

Die FIG 3 zeigt eine Eingabebaugruppe 11 ausgestaltet zum Anschluss eines ersten Sensors 1 und zum Erfassen eines binären Prozess-Signals S1 des ersten Sensors 1. Weiterhin ausgestaltet weitere Prozess-Signale S2,S3,S4 zu erfassen. Die Eingabebaugruppe 11 weist ein Speichermittel 19 auf, welches ausgestaltet ist, von den Prozess-Signalen S1,S2,S3,S4 jeweils einen Signalverlauf x₁₍ₜ₎,x₂₍ₜ₎,x₃₍ₜ₎,x₄₍ₜ₎ für eine vorbestimmbare Zeitspanne TB zwischen zu speichern.

Um ein neuronales Netz NN in einer Lernphase 20 mit Eingangssignal-Mustern M1,...,M5 zu versorgen, weist die Eingabebaugruppe 11 ein Lernmittel 21 auf. Das Lernmittel 21 weist zusätzlich ein Trigger-Mittel 22 auf, welches dafür sorgt dem neuronalen Netz NN zu einem Schaltzeitpunkt tₛ, nämlich dem Zeitpunkt an dem das binäre Prozess-Signals S1 einen ersten Flanken-Wechsel F1 von logisch Null nach logisch Eins oder einen zweiten Flanken-Wechsel F1 von logisch Eins nach logisch Null aufzeigt, die zwischengespeicherten Werte x₂₍tₛ₋ Tx₎,x₃₍tₛ₋Tx₎,x₄₍tₛ₋Tx₎ der Signalverläufe x₁₍ₜ₎,x₂₍ₜ₎,x₃₍ₜ₎ zu einen Lernzeitpunkt tₛ₋Tx, welcher sich aus Schaltzeitpunkt abzüglich einer Prognosezeitspanne Tx ergibt, als stimulierendes Eingangssignal-Muster M1,...,M5 zuzuführen.

Ist die Lernphase 20 beendet, wird eine Überwachungsphase 30 eingeführt, dazu weist die Eingabebaugruppe 11 ein Überwachungsmittel 31 auf, welches ausgestaltet ist die weiteren Signalverläufe x₂₍ₜ₎,x₃₍ₜ₎,x₄₍ₜ₎ derart zu überwachen, dass aktuelle Werte x₂,x₃,x₄ aus den Signalverläufen x₂₍ₜ₎,x₃₍ₜ₎,x₄₍ₜ₎ dem neuronalen Netz NN als auszuwertendes Eingangssignal-Muster M1,...,M5 zugeführt werden und bei einer Übereinstimmung eines gelernten Eingangssignal-Musters M1,...,M5 mit einem zugeführten Eingangssignal-Muster wird der zugehörige Flanken-Wechsel F1,F2 als Prognosewerte PW für das binäre Prozess-Signal S1 der Automatisierungssteuerung 10 über ein Sendemittel 14 und eine Feldbusschnittstelle 13 zur Verfügung gestellt.

## Patentansprüche

1. Verfahren zum Bereitstellen eines prognostizierten binären Prozess-Signals (S1) von einem ersten Sensor (1) für eine Automatisierungssteuerung (10), welche einen industriellen Prozess steuert, wobei eine Eingabebaugruppe (11) neben dem zu prognostizierenden binären Prozess-Signal (S1) von dem ersten Sensor (1) weitere Prozess-Signale (S2,S3,S4) von weiteren Sensoren (2,3,4) erfasst,
wobei von den Prozess-Signalen (S1,S2,S3,S4) jeweils ein Signalverlauf (x₁₍ₜ₎,x₂₍ₜ₎,x₃₍ₜ₎,x₄₍ₜ₎) mit seinen jeweiligen zeitlich zugeordneten Werten (x₁₍ₜ₎,x₂₍ₜ₎,x₃₍ₜ₎,x₄₍ₜ₎) für eine vorbestimmbare Zeitspanne(TB) zwischengespeichert wird, und
wobei zur späteren Kompensation einer Verzögerung zwischen einem tatsächlichen Auftreten des binären Prozess-Signals (S1) am ersten Sensor (1) und einer darauffolgenden Verarbeitung des binären Prozess-Signals (S1) in der Automatisierungssteuerung (10) zunächst eine Lernphase (20) für ein neuronales Netz (NN) durchgeführt wird, wobei nach einer Beendigung der Lernphase (20) eine Betriebsphase (30) durchgeführt wird
- in der Lernphase (20) dem neuronalen Netz (NN) zu einem Schaltzeitpunkt(tₛ), nämlich dem Zeitpunkt an dem das binäre Prozess-Signal (S1) einen ersten Flanken-Wechsel (F1) von logisch Null nach logisch Eins oder einen zweiten Flanken-Wechsel (F2) von logisch Eins nach logisch Null aufzeigt, die zwischengespeicherten Werte (x₂₍tₛ₋Tx₎,x₃₍tₛ₋ Tx₎,x₄₍tₛ₋Tx₎) der Signalverläufe (x₂₍ₜ₎,x₃₍ₜ₎,x₄₍ₜ₎) zu einem Lernzeitpunkt (tₛ-Tx), welcher sich aus dem Schaltzeitpunkt(tₛ) abzüglich einer Prognosezeitspanne (Tx) ergibt, als stimulierendes Eingangssignal-Muster (M1,...,M5) zugeführt wird, wobei dem Eingangssignal-Muster (M1,...,M5) der entsprechende Flanken-Wechsel (F1,F2) zugeordnet wird, und wobei
- in der Betriebsphase (30) die weiteren Signalverläufe (x₂₍ₜ₎, x₃₍ₜ₎, x₄₍ₜ₎) derart überwacht werden, dass aktuelle Werte (x₂₍ₜ₎, x₃₍ₜ₎, x₄₍ₜ₎) aus den Signalverläufen (x₂₍ₜ₎,x₃₍ₜ₎,x₄₍ₜ₎) dem neuronalen Netz (NN) als auszuwertendes Eingangssignal-Muster (M1,...,M5) zugeführt werden und bei einer Übereinstimmung eines gelernten Eingangssignal-Musters (M1,...,M5) mit einem zugeführten Eingangssignal-Muster, der zugehörige Flanken-Wechsel (F1,F2) als Prognosewert (PW) für das binäre Prozess-Signal (S1) für die Automatisierungssteuerung (10) zu Verfügung gestellt wird.

2. Verfahren nach Anspruch 1, wobei die Überwachung in der Betriebsphase (30) auf Seiten der Eingabebaugruppe (11) oder einer der Eingabebaugruppen (11) zugeordneten Peripheriebaugruppe (12) durchgeführt wird, wobei von dort aus das prognostizierte binäre Prozess-Signal (S1) über eine Feldbuskommunikation an die Automatisierungssteuerung (10) weitergeleitet wird.

3. Verfahren nach Anspruch 1 oder 2, wobei in der Betriebsphase (30) ein nach der Prognose zum Schaltzeitpunkt(tₛ) eintretendes reales Prozess-Signals (S1) zur laufenden Verbesserung der Prognose für einem im Hintergrund fortlaufenden Lernprozess verwendet wird.

4. Verfahren nach einem der Ansprüche 1 bis 3, wobei das neuronale Netz (NN) als eine selbstorganisierende Karte (SOM) ausgestaltet ist.

5. Eingabebaugruppe (11) ausgestaltet zum Anschluss eines ersten Sensors (1) und zum Erfassen eines binären Prozess-Signals (S1) des ersten Sensors (1) weiterhin ausgestaltet weitere Prozess-Signale (S2,S3,S4) zu erfassen umfassend
- ein Speichermittel (19) ausgestaltet von den Prozess-Signalen (S1,S2,S3,S4) jeweils einen Signalverlauf (x1(t),x2(t),x3(t),x4(t)) für eine vorbestimmbare Zeitspanne(TB) zwischen zu speichern,
- ein Lernmittel (21) aufweisend ein neuronales Netz (NN) und ein Trigger-Mittel (22), ausgestaltet dem neuronalen Netz (NN) zu einem Schaltzeitpunkt(tₛ), nämlich dem Zeitpunkt an dem das binäre Prozess-Signal (S1) einen ersten Flanken-Wechsel (F1) von logisch Null nach logisch Eins oder einen zweiten Flanken-Wechsel (F2) von logisch Eins nach logisch Null aufzeigt, die zwischengespeicherten Werte (x₁₍tₛ₋Tx₎,x₂₍tₛ₋Tx₎,x₃₍tₛ₋Tx₎,x₄₍tₛ₋Tₓ₎) der Signalverläufe (x₁₍ₜ₎,x₂₍ₜ₎,x₃₍ₜ₎) zu einem Lernzeitpunkt (tₛ-Tx), welcher sich aus dem Schaltzeitpunkt(tₛ) abzüglich einer Prognosezeitspanne (Tx) ergibt, als stimulierendes Eingangssignal-Muster (M1,...,M5) zuzuführen, weiterhin ausgestaltet dem Eingangssignal-Muster (M1,...,M45) den entsprechenden Flanken-Wechsel (F1,F2) zuzuordnen,
- ein Überwachungsmittel (31) ausgestaltet die weiteren Signalverläufe (x2(t),x3(t),x4(t)) derart zu überwachen, dass aktuelle Werte(x2(t),x3(t),x4(t)) aus den Signalverläufen (x2(t),x3(t),x4(t)) dem neuronalen Netz (NN) als auszuwertendes Eingangssignal-Muster zugeführt werden und bei einer Übereinstimmung eines gelernten Eingangssignal-Musters (M1,...,M5) mit einem zugeführten Eingangssignal-Muster, der zugehörige Flanken-Wechsel (F1,F2) als Prognosewert (PW) für das binäre Prozess-Signals (S1) der Automatisierungssteuerung (10) zur Verfügung gestellt wird.

6. Eingabebaugruppe (11) nach Anspruch 5 mit einer Feldbusschnittstelle (13), wobei ein Sendemittel (14) vorhanden ist, welches ausgestaltet ist den Prognosewert vorrangig vor anderen Meldungen abzusenden.

7. Eingabebaugruppe (11) nach Anspruch 5 oder 6, wobei das eine Lernmittel (21) weiterhin ausgestaltet ist, im Hintergrund zu dem Überwachungsmittel (31) zu arbeiten und ein nach der Prognose zum Schaltzeitpunkt(tS) eintretendes reales Prozess-Signal (S1) zur laufenden Verbesserung der Prognose für einem im Hintergrund fortlaufenden Lernprozess zu verwenden.

## Claims

1. Method for providing a predicted binary process signal (S1) of a first sensor (1) for an automation controller (10), which controls an industrial process, wherein an input module (11) acquires further process signals (S2,S3,S4) of further sensors (2,3,4) in addition to the binary process signal (S1) to be predicted of the first sensor (1),
wherein, from the process signals (S1,S2,S3,S4), a signal profile (x₁₍ₜ₎,x₂₍ₜ₎,x₃₍ₜ₎,x₄₍ₜ₎) with its respective temporal assigned values (x₁₍ₜ₎,x₂₍ₜ₎,x₃₍ₜ₎,x₄₍ₜ₎) is in each case temporarily stored for a predeterminable interval (TB), and wherein in order to later compensate for a delay between an actual occurrence of the binary process signal (S1) at the first sensor (1) and a subsequent processing of the binary process signal (S1) in the automation controller (10), firstly a learning phase (20) for a neural network (NN) is performed, wherein after the learning phase (20) is completed, an operating phase (30) is performed,
- in the learning phase (20), at a switching moment (tₛ), namely the moment at which the binary process signal (S1) indicates a first edge change (F1) from logical zero to logical one or a second edge change (F2) from logical one to logical zero, the temporarily stored values (x₂₍tₛ₋Tx),x₃₍tₛ₋ Tx₎,x₄₍tₛ₋Tx₎) of the signal profiles (x₂₍ₜ₎, x₃₍ₜ₎,x₄₍ₜ₎) at a learning moment (tₛ-Tx), which is produced from the switching moment (tₛ) minus a prediction interval (Tx), are supplied to the neural network (NN) as a stimulating input signal pattern (M1,...,M5), wherein the input signal pattern (M1,...,M5) is assigned the corresponding edge change (F1,F2), and wherein
- in the operating phase (30) the further signal profiles (x₂₍ₜ₎,x₃₍ₜ₎,x₄₍ₜ₎) are monitored in such a manner that current values (x₂₍ₜ₎,x₃₍ₜ₎,x₄₍ₜ₎) from the signal profiles (x₂₍ₜ₎,x₃₍ₜ₎,x₄₍ₜ₎) are supplied to the neural network (NN) as an input signal pattern (M1,...,M5) to be evaluated and, if a learned input signal pattern (M1,...,M5) corresponds with a supplied input signal pattern, the associated edge change (F1,F2) is made available to the automation controller (10) as a predicted value (PW) for the binary process signal (S1).

2. Method according to claim 1, wherein the monitoring in the operating phase (30) is performed on the part of the input module (11) or on the part of a peripheral module (12) assigned to the input module (11), wherein from there the predicted binary process signal (S1) is forwarded to the automation controller (10) via a field bus communication.

3. Method according to claim 1 or 2, wherein in the operating phase (30) a real process signal (S1), which occurs after the prediction at the switching moment (tₛ), is used for the ongoing improvement of the prediction for a learning process that is continuing in the background.

4. Method according to one of claims 1 to 3, wherein the neural network (NN) is embodied as a self-organising map (SOM).

5. Input module (11) embodied to connect a first sensor (1) and to acquire a binary process signal (S1) of the first sensor (1), furthermore embodied to acquire further process signals (S2,S3,S4), comprising
- a storage means (19), embodied to temporarily store a signal profile (x1(t),x2(t),x3(t),x4(t)) in each case from the process signals (S1,S2,S3,S4) for a predeterminable interval (TB),
- a learning means (21), having a neural network (NN) and a trigger means (22), embodied to supply the neural network (NN), at a switching moment (tₛ), namely the moment at which the binary process signal (S1) indicates a first edge change (F1) from logical zero to logical one or a second edge change (F2) from logical one to logical zero, with the temporarily stored values (x₁₍tₛ₋Tx₎,x₂₍tₛ₋Tx₎,x₃₍tₛ₋Tx₎,x₄₍tₛ₋Tx₎) of the signal profiles (x₁₍ₜ₎,x₂₍ₜ₎,x₃₍ₜ₎) at a learning moment (tₛ-Tx), which is produced from the switching moment (tₛ) minus a prediction interval (Tx), as a stimulating input signal pattern (M1,...,M5), furthermore embodied to assign the input signal pattern (M1,...,M45) the corresponding edge change (F1,F2),
- a monitoring means (31), embodied to monitor the further signal profiles (x2(t),x3(t),x4(t)) in such a manner that current values (x2(t),x3(t),x4(t)) from the signal profiles (x2(t),x3(t),x4(t)) are supplied to the neural network (NN) as an input signal pattern to be evaluated and, if a learned input signal pattern (M1,...,M5) corresponds with a supplied input signal pattern, the associated edge change (F1,F2) is made available to the automation controller (10) as a predicted value (PW) for the binary process signal (S1).

6. Input module (11) according to claim 5, with a field bus interface (13), wherein a transmitting means (14) is present, which is embodied to submit the prediction value with priority over other messages.

7. Input module (11) according to claim 5 or 6, wherein the one learning means (21) is furthermore embodied to work in the background of the monitoring means (31) and to use a real process signal (S1), which occurs after the prediction at the switching moment (tS), for the ongoing improvement of the prediction for a learning process that is continuing in the background.

## Revendications

1. Procédé pour disposer d'un signal (S1) de processus binaire prévu d'un premier capteur (1) pour une commande (10) d'automatisation, qui commande un processus industriel, dans lequel un module (11) d'entrée détecte, outre le signal (S1) de processus binaire à prévoir du premier capteur (1), d'autres signaux (S2, S3, S4) de processus d'autres capteurs (2, 3, 4), dans lequel on met en mémoire tampon, pendant un laps (TB) de temps pouvant être déterminé à l'avance, parmi les signaux (S1, S2, S3, S4) de processus, respectivement une courbe (x₁₍ₜ₎, x₂₍ₜ₎, x₃₍ₜ₎, x₄₍ₜ₎) respective avec ses valeurs (x₁₍ₜ₎, x₂₍ₜ₎, x₃₍ₜ₎, x₄₍ₜ₎) respectives affectées dans le temps, et
dans lequel, pour une compensation ultérieure d'un retard entre une apparition réelle du signal (S1) de processus binaire au premier capteur (1) et un traitement, qui s'ensuit, du signal (S1) de processus binaire dans la commande (10) d'automatisation, on effectue d'abord une phase (20) d'apprentissage d'un réseau (NN) neuronal, dans lequel, après avoir mis fin à la phase (20) d'apprentissage, on effectue une phase (30) de fonctionnement,
- dans la phase (20) d'apprentissage, on envoie au réseau (NN) neuronal à un instant (tₛ) de commutation, à savoir l'instant où le signal (S1) de processus binaire indique un premier changement (F1) de front d'un zéro logique à un un logique ou un deuxième changement (F2) d'un un logique à un zéro logique, les valeurs (x₂(tₛ-Tx), x₃(tₛ₋Tx), x₄(tₛ₋Tx)) mises en mémoire tampon des courbes (x₂₍ₜ₎, x₃₍ₜ₎, x₄₍ₜ₎) de signal à un instant (tₛ-Tx) d'apprentissage, qui provient de l'instant (tₛ) de commutation diminué d'un laps de temps (Tx) de prévision, comme modèle (M1, ..., M5) de signal d'entrée stimulant, dans lequel, au modèle (M1, ..., M5) de signal d'entrée, on affecte le changement (F1, F2) de front correspondant, et dans lequel
- dans la phase (30) de fonctionnement, on contrôle les autres courbes (x₂₍ₜ₎, x₃₍ₜ₎, x₄₍ₜ₎) de signal, de manière à envoyer, comme modèle (M1, ..., M5) de signal d'entrée à analyser au réseau (NN) neuronal, des valeurs (x₂₍ₜ₎, x₃₍ₜ₎, x₄₍ₜ₎) en cours, à partir des courbes (x₂₍ₜ₎, x₃₍ₜ₎, x₄₍ₜ₎) de signal et, s'il y a coïncidence entre un motif (M1, ..., M5) de signal d'entrée d'apprentissage avec un motif de signal d'entrée envoyé, on met à disposition le changement (F1, F2) de front, qui lui appartient, comme valeur (PW) de prévision du signal (S1) de processus binaire pour la commande (10) d'automatisation.

2. Procédé suivant la revendication 1, dans lequel on effectue le contrôle dans la phase (30) de fonctionnement, du côté du module (11) d'entrée ou d'un module (12) périphérique affecté aux modules (11) d'entrée, dans lequel, à partir de là, on achemine le signal (S1) de processus binaire prévu par une communication de bus sur site à la commande (10) d'automatisation.

3. Procédé suivant la revendication 1 ou 2, dans lequel, dans la phase (30) de fonctionnement, on utilise un signal (S1) de processus réel, apparaissant après la prévision à l'instant (tₛ) de commutation pour l'amélioration continue de la prévision pour un processus d'apprentissage se poursuivant en arrière-plan.

4. Procédé suivant l'une des revendications 1 à 3, dans lequel le réseau (NN) neuronal est conformé sous la forme d'une carte (SOM) autoorganisatrice.

5. Module (11) d'entrée conformé pour le raccordement d'un premier capteur (1) et pour la détection d'un signal (S1) de processus binaire du premier capteur (1) conformé en outre pour détecter d'autres signaux (S2, S3, S4) de processus comprenant
- un moyen (19) de mémoire conformé pour la mise en mémoire tampon des signaux (S1, S2, S3, S4) de processus respectivement d'une courbe (x1(t), x2(t), x3(t), x4(t)) de signal pendant un laps (TB) de temps pouvant être déterminé à l'avance,
- un moyen (21) d'apprentissage comportant un réseau (NN) neuronal et un moyen (22) de déclenchement conformé pour envoyer au réseau (NN) neuronal à un instant (tₛ) de commutation, à savoir l'instant où le signal (S1) de processus binaire indique un premier changement (F1) de front d'un zéro logique à un un logique ou un deuxième changement (F2) d'un un logique à un zéro logique, les valeurs (x₁(tₛ₋Tx),x₂(tₛ₋Tx), x₃(tₛ₋Tx), x₄(tₛ₋Tx)) mises en mémoire tampon des courbes (x₁₍ₜ₎, x₂₍ₜ₎, x₃₍ₜ₎) de signal à un instant (tₛ-Tx) d'apprentissage, qui provient de l'instant (tₛ) de commutation diminué d'un laps de temps (Tx) de prévision, comme modèle (M1, ..., M5) de signal d'entrée stimulant, conformé en outre pour affecter le changement (F1, F2) de front correspondant au motif (M1, ..., M45) de signal d'entrée,
- un moyen (31) de contrôle conformé pour contrôler les autres courbes (x2(t), x3(t), x4(t)) de signal, de manière à envoyer, comme modèle (M1, ..., M5) de signal d'entrée à analyser au réseau (NN) neuronal, des valeurs (x2(t), x3(t), x4(t)) en cours, à partir des courbes (x2(t), x3(t), x4(t)) de signal et, s'il y a coïncidence entre un motif (M1, ..., M5) de signal d'entrée d'apprentissage avec un motif de signal d'entrée envoyé, on met à disposition le changement (F1, F2) de front, qui lui appartient, comme valeur (PW) de prévision du signal (S1) de processus binaire pour la commande (10) d'automatisation.

6. Module (11) d'entrée suivant la revendication 5, comprenant une interface (13) de bus sur site, dans lequel il y a un moyen (14) d'émission, qui est conformé pour envoyer la valeur de prévision en priorité avant d'autres messages.

7. Module (11) d'entrée suivant la revendication 5 ou 6, dans lequel le un moyen (21) d'apprentissage est conformé en outre pour travailler en arrière-plan par rapport au moyen (31) de contrôle et pour utiliser un signal (S1) de processus réel apparaissant après la prévision à l'instant (tS) de commutation pour l'amélioration en continu de la prévision pour un processus d'apprentissage se poursuivant en arrière-plan.
